# EUROPÄISCHE PATENTSCHRIFT

(11) **EP 3 415 062 B1**
(45) Veröffentlichungstag und Bekanntmachung des Hinweises auf die Patenterteilung: **21.04.2021**
(21) Anmeldenummer: 18177320.1
(22) Anmeldetag: 12.06.2018
(51) Int. Cl.: A47J 43/07

(54) **ELEKTROMOTORISCH BETRIEBENE KÜCHENMASCHINE**
KITCHEN APPLIANCE OPERATED BY AN ELECTRIC MOTOR
BROYEUR À USAGES MULTIPLES ENTRAÎNÉE PAR MOTEUR ÉLECTRIQUE

(30) Priorität: 16.06.2017 DE 102017113284
(43) Veröffentlichungstag der Anmeldung: 19.12.2018
(73) Patentinhaber: Vorwerk & Co. Interholding GmbH, 42275 Wuppertal (DE)
(72) Erfinder: Kvesic, Mirko, 52428 Jülich (DE); Nachbarschulte, Janik, 45239 Essen (DE); Erner, Thomas, 42289 Wuppertal (DE); Nezami, Amin, 42889 Remscheid (DE); Varnhorst, Mathias, 42349 Wuppertal (DE); Katagarov, Daniel, 48167 Münster (DE); Bettenhausen, Philipp, 42109 Wuppertal (DE)
(74) Vertreter: Müller, Enno

(56) Entgegenhaltungen:
- EP-A1- 0 095 797
- WO-A1-2013/131731
- FR-A- 684 509

## Beschreibung

### Gebiet der Technik

Die Erfindung betrifft eine elektromotorisch betriebene Küchenmaschine mit einem einen Elektromotor aufweisenden Basisgerät, einem an dem Basisgerät anordenbaren Zubereitungsgefäß, welchem Zubereitungsgefäß eine Heizeinrichtung und ein Rührwerk zugeordnet sind, und einer mit dem Zubereitungsgefäß verbindbaren Destillationseinrichtung, welche eine Dampfaufnahmeeinrichtung, eine Kondensationseinrichtung und eine Flüssigkeitsausgabeeinrichtung aufweist, wobei das Zubereitungsgefäß und die Dampfaufnahmeeinrichtung in verbundenem Zustand von Zubereitungsgefäß und Destillationseinrichtung eine Strömungsverbindung zueinander aufweisen.

Des Weiteren betrifft die Erfindung eine Destillationseinrichtung zum Aufsetzen auf ein Zubereitungsgefäß einer Küchenmaschine mit einer Dampfaufnahmeeinrichtung, einer Kondensationseinrichtung und einer Flüssigkeitsausgabeeinrichtung, wobei die Destillationseinrichtung einen Verbindungsbereich zur Herstellung einer Strömungsverbindung zu dem Zubereitungsgefäß der Küchenmaschine aufweist, wobei die Dampfaufnahmeeinrichtung eine in dem Verbindungsbereich ausgebildete Eintrittsöffnung aufweist, wobei der Verbindungsbereich eine die Eintrittsöffnung aufweisende Grundplatte aufweist, und wobei die Destillationseinrichtung einen der Flüssigkeitsausgabeeinrichtung zugeordneten Aufnahmebereich zur Anordnung eines Auffanggefäßes aufweist.

Ebenso betrifft die Erfindung auch ein Verfahren zum Betrieb einer Küchenmaschine.

### Stand der Technik

Elektromotorisch betriebene Küchenmaschinen und eigenständige Destillationseinrichtungen sind im Stand der Technik bekannt.

Die elektromotorisch betriebenen Küchenmaschinen weisen bspw. ein Zubereitungsgefäß auf, in welches ein Rührwerk durch einen Gefäßboden hineinragt. Das Rührwerk kann bspw. als ein Messersatz mit einer Mehrzahl von Messern ausgebildet sein, um in dem Zubereitungsgefäß befindliches Zubereitungsgut zu zerkleinern und/oder zu rühren. Es ist des Weiteren bekannt, in dem Zubereitungsgefäß befindliches Zubereitungsgut, insbesondere auch Flüssigkeiten, zu erhitzen, wobei das Erhitzen gleichzeitig unter Betrieb des Rührwerkes erfolgen kann. Eine derartige Küchenmaschine zeigt beispielsweise die WO 2013/131 731 A1.

Daneben sind im Stand der Technik als selbständige Geräte ausgebildete Destillationseinrichtungen bekannt, welche zur Herstellung von Alkohol, insbesondere Trinkalkohol, dienen. Zur Herstellung von Trinkalkohol werden üblicherweise zwei Destillationsvorgänge durchgeführt. Ein erster Destillationsvorgang dient zur Herstellung einer Alkoholbasis. Ein zweiter Destillationsvorgang dient zur Aromatisierung der Alkoholbasis. Insgesamt sind eine Vielzahl von Herstellungsschritten auszuführen, die teils außerhalb der Destillationseinrichtung und teilweise mittels der Destillationseinrichtung erfolgen. Übliche Destillationseinrichtungen offenbaren beispielsweise die EP 0 095 797 A1 und FR 684509 A.

Üblicherweise wird zunächst eine Maische hergestellt und gegoren. Hierzu wird Getreide zerkleinert und nach Zugabe von Wasser durch Erhitzen und Rühren verkleistert. Zudem wird ein Enzym oder Malz hinzugegeben. Die so hergestellte Maische muss üblicherweise einige Tage gären, bevor diese weiterverarbeitet werden kann.

Für den Destillationsvorgang wird die Maische nach abgeschlossener Gärung in ein entsprechendes Gefäß der Destillationseinrichtung gegeben und dort bspw. mittels eines Bunsenbrenners zum Kochen gebracht. Der während des Kochvorgangs entstehende Dampf wird kondensiert, wobei ein Vor- und Nachlauf des Kondensats abgetrennt wird, da dieser bei Unterschreiten einer Siedetemperatur von ca. 78 Grad Celsius einen zu hohen Anteil Methanol enthält, dessen Abbauprodukte schwerwiegende Folgen für den Menschen haben können, angefangen von Kopfschmerzen und Nervenschäden bis hin zu lebensbedrohlichen Folgen. Der unbedenklich genießbare Anteil der so hergestellten Alkoholbasis wird anschließend mit Wasser verdünnt und mit Aromastoffen angereichert. Dies erfolgt wiederum innerhalb der Destillationseinrichtung, wo das Alkohol-Wasser-Gemisch unter Zusatz der Aromastoffe erneut verdampft, kondensiert und wieder aufgegangen wird. Auch dabei wird der Vor- und Nachlauf abgetrennt.

Nachteilig bei den bekannten Destillationseinrichtungen ist, dass diese lediglich für den Destillationsvorgang verwendet werden können, jedoch nicht zur Herstellung der Maische. Daher werden mehrere separate Geräte benötigt, was zum einen eine Handhabung während der Alkoholherstellung erschwert und zum anderen einen großen Stauraum erfordert. Aufgrund einer benötigten Temperaturregelung ist die Herstellung der Maische zudem sehr aufwändig. Darüber hinaus ist die Temperatur für den Destillationsvorgang einzustellen und zu überwachen, um einerseits ein Anbrennen zu verhindern und andererseits den Anteil des Methanols innerhalb des Alkohols gering zu halten. Daher ist die Herstellung von Alkohol bisher nur besonders kundigen Nutzern zu empfehlen.

### Zusammenfassung der Erfindung

Ausgehend von dem vorgenannten Stand der Technik ist es Aufgabe der Erfindung, die Herstellung von Alkohol einem größeren Nutzerkreis zugänglich zu machen und dafür die zuvor dargestellten Nachteile zu beseitigen.

Zur Lösung der vorgenannten Aufgabe schlägt die Erfindung vor, dass die Destillationseinrichtung einen der Flüssigkeitsausgabeeinrichtung zugeordneten Aufnahmebereich zur Anordnung eines Auffanggefäßes aufweist, wobei die Flüssigkeitsausgabeeinrichtung in dem Aufnahmebereich aus einem Gehäuse der Destillationseinrichtung herausragt.

Die Flüssigkeitsausgabeeinrichtung ist in einem besonders einfachen Fall ein Endbereich eines Strömungskanals, welcher sich in Strömungsrichtung des Kondensats an die Kondensationseinrichtung anschließt. Eine Auslassöffnung der Flüssigkeitsausgabeeinrichtung ist vorzugsweise in Richtung der Gravitationskraft gerichtet, sodass das Kondensat besonders einfach der Schwerkraft folgend aus der Kondensationseinrichtung und durch die Flüssigkeitsausgabeeinrichtung herausströmen kann. Unterhalb der Flüssigkeitsausgabeeinrichtung kann dann innerhalb des Aufnahmebereiches ein Auffanggefäß angeordnet werden, bspw. ein Glas, eine Flasche oder ein sonstiges Gefäß. Je nach der Gestaltung des Gehäuses der Destillationseinrichtung kann der Aufnahmebereich vorzugsweise über dem Zubereitungsgefäß der Küchenmaschine und unterhalb der Flüssigkeitsausgabeeinrichtung angeordnet sein. Besonders vorzugsweise stellt eine Grundplatte der Destillationseinrichtung, welche auf das Zubereitungsgefäß aufgesetzt wird, den Aufnahmebereich zur Verfügung.

Die elektromotorisch betriebene Küchenmaschine kombiniert übliche Funktionen wie Rühren und Heizen mit den Funktionen einer Destillationseinrichtung. Die Destillationseinrichtung bildet ein Zubehörteil für die Küchenmaschine, insbesondere einen Aufsatz für das Zubereitungsgefäß. Es empfiehlt sich, dass das Zubereitungsgefäß und die Destillationseinrichtung zur Verbindung miteinander ausgebildet sind, bspw. durch formkorrespondierende Verbindungsbereiche, und ggf. eine Einrichtung zur gegenseitigen Verrastung oder Verriegelung aufweisen. Insbesondere kann zu diesem Zweck eine Verriegelungseinrichtung verwendet werden, die üblicherweise auch zur Verrieglung des Zubereitungsgefäßes mit einem Deckel dient. Alternativ kann es auch vorgesehen sein, dass die Destillationseinrichtung nicht auf das Zubereitungsgefäß aufgesetzt wird, sondern anderweitig mit dem Basisgerät der Küchenmaschine verbunden wird, wobei sichergestellt ist, dass der aus dem Zubereitungsgefäß aufsteigende Dampf in die Dampfaufnahmeeinrichtung der Destillationseinrichtung gelangen kann. Grundsätzlich ist es möglich, dass die Destillationseinrichtung außerhalb der Küchenmaschine angeordnet ist, sofern sichergestellt ist, dass das Zubereitungsgefäß eine Strömungsverbindung zu der Dampfaufnahmeeinrichtung der Destillationseinrichtung aufweist. Durch die erfindungsgemäße Kombination der elektromotorisch betriebenen Küchenmaschine mit einer Destillationseinrichtung kann eine Vielzahl von für die Herstellung von Alkohol auszuführenden Schritten mit der so hergestellten Kombination ausgeführt werden. Dies betrifft insbesondere die Verfahrensschritte zur Herstellung der Maische und zum Durchführen des Brennvorgangs. Im Einzelnen ermöglicht die mit dem Destillationsaufsatz ergänzte Küchenmaschine ein Zerkleinern von Getreide, eine Aufnahme von zugegebenem Wasser, ein Erhitzen, ein Rühren, eine Aufnahme von Enzym oder Malz sowie das Gären innerhalb des Zubereitungsgefäßes. Sofern das Zubereitungsgefäß der Küchenmaschine während der Zeitdauer des Gärprozesses für andere Aufgaben benötigt wird, kann es selbstverständlich vorgesehen sein, dass der Nutzer entweder für den Gärprozess oder für einen anderweitigen Betrieb der Küchenmaschine ein separates Gefäß, insbesondere ein weiteres Zubereitungsgefäß der Küchenmaschine, nutzt. Für einen Brennvorgang kann die Kombination aus Küchenmaschine und Destillationseinrichtung die Verfahrensschritte des Kochens der Maische, Kondensieren des Dampfes und des Auffangens des Kondensats durchführen und ggf. zusätzlich für ein Abtrennen des Vor- und Nachlaufs des Kondensats sorgen. Ggf. kann eine Filtration des Dampfes vorgesehen sein. Die durch die Destillationseinrichtung ergänzte Küchenmaschine ist des Weiteren auch zur Durchführung der Aromatisierung des Alkohols ausgebildet, wobei das Zubereitungsgefäß um einen Siebeinsatz ergänzt wird, mit welchem Aromastoffe, sogenannte "Botanicals", in die in dem Zubereitungsgefäß enthaltene Alkoholbasis eingebracht werden können. Die Aromastoffe können ebenfalls wieder mittels des Rührwerkes der Küchenmaschine zerkleinert werden. Für die Aromatisierung wird die Alkoholbasis mit Wasser verdünnt und ebenfalls wieder mittels der Heizeinrichtung zum Kochen gebracht, wobei der Dampf wie zuvor beschrieben kondensiert und als Flüssigkeit aufgefangen wird. Auch dabei kann ein Vor- und Nachlauf überwacht bzw. abgetrennt werden.

Insgesamt ist es durch die Ergänzung einer üblichen elektromotorisch betriebenen Küchenmaschine mit einer Destillationseinrichtung im Sinne eines Zubehörteils möglich, einen geführten, überwachten und anwenderfreundlichen Herstellungsprozess für Alkohol durchzuführen. Dabei können zusätzliche Einrichtungen der Küchenmaschine ebenfalls von Nutzen sein, bspw. eine integrierte Waage zur Messung der eingegebenen Zutaten bei der Herstellung der Maische oder auch der vor der Aromatisierung zugegebenen Wassermenge.

Des Weiteren ist auch eine der Heizeinrichtung zugeordnete Temperaturmesseinrichtung von Nutzen, um bspw. die aktuelle Temperatur der in dem Zubereitungsgefäß vorhandenen Maische oder Alkoholbasis zu bestimmen. Durch die mittels einer Auswerte- und Steuereinrichtung der Küchenmaschine erlangte Prozesssicherheit ist die Herstellung von Alkohol anwenderunabhängig, sodass die Herstellung von Alkohol einem größeren Nutzerkreis zugänglich wird.

Es kann vorgesehen sein, dass die Dampfaufnahmeeinrichtung einen Temperatursensor zur Messung der Dampftemperatur aufweist. Gemäß dieser Ausgestaltung weist die Dampfaufnahmeeinrichtung selbst einen Temperatursensor auf, sodass die aktuelle Temperatur des Dampfes innerhalb der Dampfaufnahmeeinrichtung gemessen werden kann. Dies ermöglicht eine besonders genaue Temperaturmessung, um ein übermäßiges Entstehen von Methanol zu verhindern. Die üblicherweise innerhalb der elektromotorisch betriebenen Küchenmaschine vorgesehene Temperaturmesseinrichtung ist gewöhnlich der Heizeinrichtung zugeordnet. Häufig ist diese Temperaturmesseinrichtung ebenso wie die Heizeinrichtung in einen Bodenbereich des Zubereitungsgefäßes integriert. Die dort gemessene Temperatur ist unter Umständen jedoch nicht identisch zu der aktuellen Temperatur des in dem Zubereitungsgefäß enthaltenen Zubereitungsgutes und vor allem nicht zu dem Dampf innerhalb der Dampfaufnahmeeinrichtung. Daher gibt der zusätzlich innerhalb der Dampfaufnahmeeinrichtung angeordnete Temperatursensor - bei alleinigem oder zusätzlichem Betrieb - eine größere Sicherheit über die tatsächliche Temperatur während der Verdampfung. Somit kann genau bestimmt werden, wann die Siedetemperatur von gesundheitsgefährdendem Methanol (65 Grad Celsius) bzw. unbedenklichem Ethanol (78 Grad Celsius) erreicht ist. Besonders bevorzugt befindet sich der Temperatursensor in einem Strömungsweg des Dampfes, wobei die Entfernung zwischen dem Zubereitungsgefäß und dem Messort nicht unnötig weit auseinander liegen sollte bzw. nicht durch kühlende Wandungen und/oder Hindernisse beeinträchtigt sein sollte. Vorzugsweise kann der Dampf den Temperatursensor ohne vorherige Verwirbelung bzw. Strömungsumlenkung erreichen. Der Temperatursensor ist vorzugsweise ein elektrisches oder elektronisches Bauelement, welches ein elektrisches Signal an eine Steuer- und Auswerteeinrichtung der Küchenmaschine übermittelt. Dazu besteht zwischen dem Basisgerät der Küchenmaschine und der Destillationseinrichtung eine entsprechende elektrische Leitung. Der Temperatursensor ist vorteilhaft ein Heißleiter (NTC) oder Kaltleiter (PTC). Des Weiteren sind auch Thermoelemente oder andere möglich. Es kann auch vorgesehen sein, dass mehrere Temperatursensoren innerhalb der Dampfaufnahmeeinrichtung angeordnet sind. Die von der Vielzahl der Temperatursensoren aufgenommenen Messwerte können gemittelt oder auf andere Art und Weise zu einem Temperaturwert verarbeitet werden.

Es wird vorgeschlagen, dass die Dampfaufnahmeeinrichtung ein eine Strömungsverbindung von dem Zubereitungsgefäß zu der Kondensationseinrichtung bereitstellender Strömungskanal ist. Die Dampfaufnahmeeinrichtung wird vorzugsweise durch einen Strömungskanal gebildet, welcher den Dampf von dem Zubereitungsgefäß zu der Kondensationseinrichtung führt. Vorzugsweise erstreckt sich dieser Strömungskanal in einem geradlinigen Längenbereich in eine Richtung, welche der natürlichen Ausbreitungsrichtung des Dampfes entspricht, d.h. in vertikale Richtung. Der Strömungskanal kann vorzugsweise in einem Gehäuse der Destillationseinrichtung ausgebildet sein, wobei diese in einem Verbindungsbereich zu dem Zubereitungsgefäß der Küchenmaschine bevorzugt eine Eintrittsöffnung zum Einströmen des Dampfes in die Dampfaufnahmeeinrichtung aufweist. Die Destillationseinrichtung bzw. das Zubereitungsgefäß weisen vorteilhaft korrespondierende Verbindungsbereiche zur Herstellung der Strömungsverbindung auf, wobei die Dampfaufnahmeeinrichtung die in dem Verbindungsbereich ausgebildete Eintrittsöffnung aufweist. Besonders vorteilhaft weist die Destillationseinrichtung eine auf das Zubereitungsgefäß aufsetzbare Grundplatte auf, welche eine Eintrittsöffnung in den Strömungskanal bereitstellt.

Es kann vorgesehen sein, dass sich die Dampfaufnahmeeinrichtung in Strömungsrichtung des Dampfes trichterförmig verjüngt. Im Bereich einer Eintrittsöffnung der Dampfaufnahmeeinrichtung kann die Trichterform noch einen möglichst großen Eintrittsquerschnitt aufweisen, sodass eine möglichst große Dampfmenge in die Dampfaufnahmeeinrichtung einströmen kann, ohne bereits an einem anderen Bereich des Zubereitungsgefäßes zu kondensieren und wieder in die Flüssigkeit zurückzuströmen. In Richtung der Kondensationseinrichtung verjüngt sich die Dampfaufnahmeeinrichtung, wodurch einerseits die Strömungsgeschwindigkeit innerhalb der Dampfaufnahmeeinrichtung erhöht wird und andererseits eine vorteilhafte Verdichtung für den anschließenden Kondensationsvorgang erreicht werden kann.

Des Weiteren wird vorgeschlagen, dass die Kondensationseinrichtung der Destillationseinrichtung eine Kühleinrichtung aufweist. Insbesondere kann es sich bei der Kühleinrichtung um einen Wärmeübertrager oder ein Peltier-Element handeln. Die Kühleinrichtung kann des Weiteren einen Kühlbehälter aufweisen, einen Ventilator oder andere Mittel, welche geeignet sind, die Temperatur des Dampfes zu reduzieren und eine Kondensation herbeizuführen. Als Wärmeübertrager kommen in diesem Zusammenhang ebenfalls Gegenstromwärmeübertrager, Kühlkreisläufe oder andere infrage. Es empfiehlt sich insbesondere, einen Wärmeübertrager als Kühlschlange auszubilden, sodass eine möglichst große Wechselwirkungsstrecke zur Kondensation des Dampfes zur Verfügung steht.

Des Weiteren kann dem Aufnahmebereich eine Einrichtung zum automatischen Entleeren und/oder Entnehmen des Auffanggefäßes zugeordnet sein. Diese Einrichtung ermöglicht gemäß einer besonders bevorzugten Ausführung eine automatische Abtrennung von Vor- und Nachlauf des während der Destillation entstehenden Kondensats. Die Einrichtung weist vorzugsweise einen Mechanismus auf, welcher das Auffanggefäß aus dem Aufnahmebereich entnimmt und diesen entleert, oder eine Öffnung in dem Auffanggefäß freigibt, sodass der Vor- bzw. Nachlauf aus dem Auffanggefäß herausfließen kann oder dergleichen. Durch diese Maßnahme wird sichergestellt, dass der Vor- bzw. Nachlauf auch tatsächlich aus dem Auffanggefäß entfernt wird und nicht in dem Destillat verbleibt, was anderenfalls zu schwerwiegenden gesundheitlichen Schäden führen könnte.

Des Weiteren wird vorgeschlagen, dass die Küchenmaschine eine Auswerte- und Steuereinrichtung aufweist, welche eingerichtet ist, eine gemessene Temperatur mit einem definierten Temperaturbereich zu vergleichen und im Falle einer Abweichung der gemessenen Temperatur von dem definierten Temperaturbereich eine Information über die Abweichung an einen Nutzer der Küchenmaschine zu übermitteln und/oder ein Entleeren eines Auffanggefäßes zu veranlassen. Mittels der Auswerte- und Steuereinrichtung lässt sich nahezu der gesamte Prozess der Alkoholherstellung überwachen, angefangen von der Herstellung der Maische bis hin zur Durchführung des Destillationsvorgangs. Um sicherzustellen, dass der Nutzer der Küchenmaschine den Vor- und Nachlauf des Kondensats auch tatsächlich aus dem Auffanggefäß entfernt, ist die Auswerte- und Steuereinrichtung eingerichtet, zu ermitteln, welcher Teil des Kondensats abgetrennt werden muss, und welcher als Trinkalkohol verwendet werden darf. In einem einfachen Fall, wird das Entleeren des Auffanggefäßes dem Nutzer der Küchenmaschine überlassen, wobei der Nutzer über die Notwendigkeit des Entleerens informiert wird. Gemäß einer automatisierten Ausführungsform steuert die Auswerte- und Steuereinrichtung eine Einrichtung zum Entleeren und/oder Entnehmen des Auffanggefäßes, um ein Entleeren des Auffanggefäßes auch ohne Zutun des Nutzers zu erreichen. Beide vorgenannten Ausführungsformen dienen dazu, dem Nutzer ein sicheres und gesundheitlich unbedenkliches Produkt zu verschaffen.

Neben der zuvor erläuterten Küchenmaschine wird mit der Erfindung des Weiteren eine Destillationseinrichtung zum Aufsetzen auf ein Zubereitungsgefäß einer Küchenmaschine mit einer Dampfaufnahmeeinrichtung, einer Kondensationseinrichtung und einer Flüssigkeitsausgabeeinrichtung vorgeschlagen, wobei die Destillationseinrichtung einen Verbindungsbereich zur Herstellung einer Strömungsverbindung zu dem Zubereitungsgefäß der Küchenmaschine aufweist, wobei die Dampfaufnahmeeinrichtung eine in dem Verbindungsbereich ausgebildete Eintrittsöffnung aufweist, wobei der Verbindungsbereich eine die Eintrittsöffnung aufweisende Grundplatte aufweist, und wobei die Destillationseinrichtung einen der Flüssigkeitsausgabeeinrichtung zugeordneten Aufnahmebereich zur Anordnung eines Auffanggefäßes aufweist, wobei der Aufnahmebereich auf der dem Zubereitungsgefäß gegenüberliegenden Seite der Grundplatte ausgebildet ist, so dass das Auffanggefäß in dem Aufnahmebereich auf die Grundplatte gestellt werden kann. Die Destillationseinrichtung dient als ein Zubehörteil für eine zuvor vorgeschlagene Küchenmaschine, wobei die Destillationseinrichtung einen Verbindungsbereich zur Verbindung mit einem Zubereitungsgefäß der Küchenmaschine aufweist. Die Dampfaufnahmeeinrichtung der Destillationseinrichtung ist dabei vorzugsweise so angeordnet und ausgebildet, dass deren Eintrittsöffnung in den Verbindungsbereich zu dem Zubereitungsgefäß ragt und aus dem Zubereitungsgefäß austretender Dampf möglichst unmittelbar in die Dampfaufnahmeeinrichtung gelangen kann. Besonders bevorzugt weist die Destillationseinrichtung eine Grundplatte, bspw. einen Gehäuseboden, auf, in welchem die Eintrittsöffnung ausgebildet ist. Die Grundplatte kann auf einen Rand des Zubereitungsgefäßes aufgesetzt werden, sodass die in der Grundplatte ausgebildete Eintrittsöffnung unmittelbar über dem Zubereitungsgefäß angeordnet ist und der Dampf nach oben in die Destillationseinrichtung aufsteigt.

Des Weiteren kann die Destillationseinrichtung alle Merkmale aufweisen, welche zuvor auch in Bezug auf die eine Destillationseinrichtung aufweisende Küchenmaschine beschrieben wurden. Dies betrifft insbesondere einen Temperatursensor der Dampfaufnahmeeinrichtung, eine Ausbildung der Dampfaufnahmeeinrichtung als Strömungskanal, eine trichterförmige Ausbildung der Dampfaufnahmeeinrichtung, unterschiedliche Arten von Kondensationseinrichtungen sowie eine Einrichtung zum automatischen Entleeren und/oder Entnehmen des Auffanggefäßes.

Schließlich wird mit der Erfindung des Weiteren ein Verfahren zum Betrieb einer erfindungsgemäßen Küchenmaschine vorgeschlagen.

Die Destillationseinrichtung wird so mit dem Zubereitungsgefäß verbunden, dass aus dem Zubereitungsgefäß strömender Dampf in die Destillationseinrichtung strömt, wobei der Dampf in einer Dampfaufnahmeeinrichtung aufgenommen wird, anschließend in einer Kondensationseinrichtung kondensiert wird und entstandenes Kondensat mittels einer Flüssigkeitsausgabeeinrichtung ausgegeben wird.

### Kurze Beschreibung der Zeichnungen

Im Folgenden wird die Erfindung anhand von Ausführungsbeispielen näher erläutert. Es zeigen:
- Fig. 1: Eine Küchenmaschine nach dem Stand der Technik,
- Fig. 2: eine Frontansicht einer Küchenmaschine mit einer auf ein Zubereitungsgefäß aufgesetzten Destillationseinrichtung,
- Fig. 3: eine Funktionsskizze einer eine Destillationseinrichtung aufweisenden Küchenmaschine in einer teilweise aufgebrochenen Darstellung.

### Beschreibung der Ausführungsformen

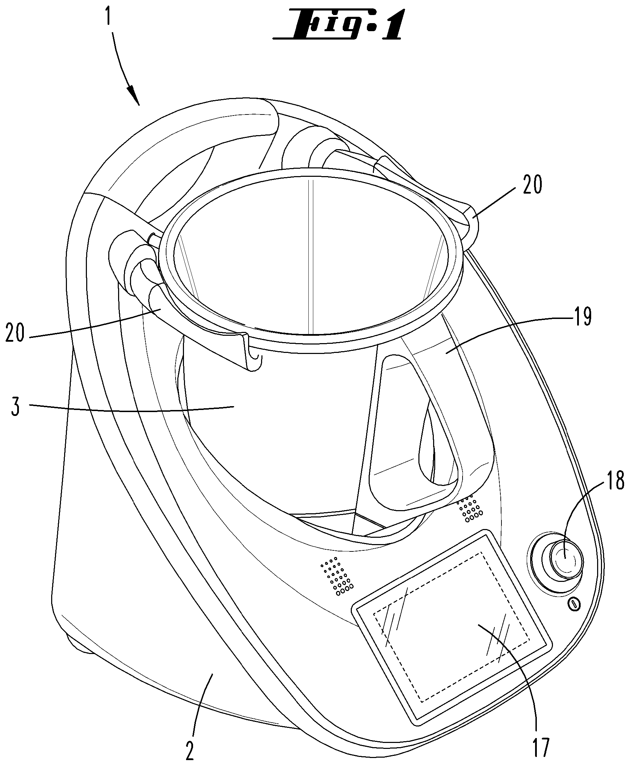

Figur 1 zeigt zunächst eine elektromotorisch betriebene Küchenmaschine 1, wie sie aus dem Stand der Technik bekannt ist. Die Küchenmaschine 1 ist als kombiniertes Koch-Mix-Gerät ausgebildet. Die Küchenmaschine 1 verfügt über ein Basisgerät 2 zur Aufnahme eines Zubereitungsgefäßes 3. Innerhalb des Zubereitungsgefäßes 3 ist ein Rührwerk 4 angeordnet, welches mit einer in dem Basisgerät 2 angeordneten Antriebseinrichtung verbunden werden kann. Das Basisgerät 2 weist des Weiteren ein Display 17 zur Anzeige eines Auswahlmenüs sowie zur Anzeige von Informationen für einen Nutzer der Küchenmaschine 1 auf. Des Weiteren verfügt die Küchenmaschine 1 über einen Schalter 18, mit welchem einerseits ein Elektromotor der Küchenmaschine 1 betätigt werden kann und zum anderen eine Auswahl bestimmter Zubereitungsschritte bestätigt werden kann, wobei die Zubereitungsschritte ggf. vorher über das Display 17 ausgewählt wurden. Das Basisgerät 2 weist des Weiteren zwei Verriegelungselemente 20 auf, welche unter anderem zur Verriegelung des Zubereitungsgefäßes 3 mit einem nicht dargestellten Deckel dienen können. Die Verriegelungselemente 20 sind in der dargestellten Anordnung um eine horizontale Achse rotierbar. Das Zubereitungsgefäß 3 weist des Weiteren einen Griff 19 auf, an welchem ein Nutzer angreifen kann, um das Zubereitungsgefäß 3 mit dem Basisgerät 2 zu verbinden, bzw. diese voneinander zu lösen. In einem Bodenbereich des Zubereitungsgefäßes 3 ist des Weiteren eine nicht dargestellte Heizeinrichtung angeordnet, welche zum Heizen des Zubereitungsgefäßes 3 dient. Die Heizeinrichtung kann bspw. eine Dickschichtheizung sein. Des Weiteren kann das Zubereitungsgefäß 3 einen Temperatursensor aufweisen, welcher eine aktuelle Temperatur an dem Zubereitungsgefäß 3 misst.

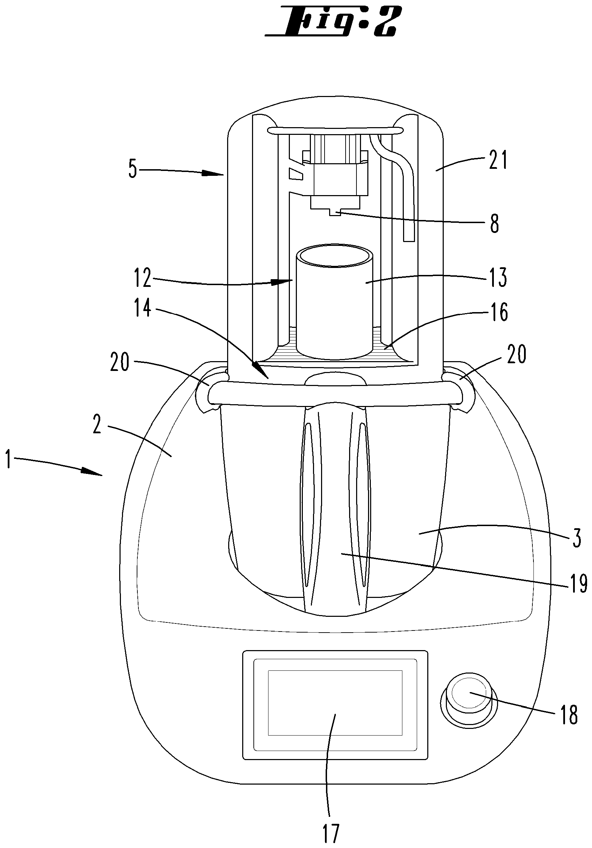

Figur 2 zeigt die Küchenmaschine 1 gemäß Figur 1 mit einer auf das Zubereitungsgefäß 3 aufgesetzten Destillationseinrichtung 5. Die Destillationseinrichtung 5 weist einen Verbindungsbereich 14 auf, nämlich hier eine Grundplatte 16 der Destillationseinrichtung 5, welche mittels der Verriegelungselemente 20 fest mit dem Zubereitungsgefäß 3 verbindbar ist. Die Destillationseinrichtung 5 verfügt im Einzelnen über ein Gehäuse 21, welches innenliegend eine Dampfaufnahmeeinrichtung 6 und eine Kondensationseinrichtung 7 aufweist. Die Dampfaufnahmeeinrichtung 6 und die Kondensationseinrichtung 7 sind in der Darstellung gemäß Figur 2 nicht zu sehen. Die Destillationseinrichtung 5 weist des Weiteren eine Flüssigkeitsausgabeeinrichtung 8 auf, welche in einem Aufnahmebereich 12 für ein Auffanggefäß 13 aus dem Gehäuse 21 der Destillationseinrichtung 5 herausragt. Die Flüssigkeitsausgabeeinrichtung 8 ist hier ein Endbereich einer Flüssigkeitsleitung. Das Auffanggefäß 13 ist hier ein Glas, welches aus dem Aufnahmebereich 12 entnommen bzw. in den Aufnahmebereich 12 eingebracht werden kann, und zwar so, dass das Auffanggefäß 13 unterhalb der Flüssigkeitsausgabeeinrichtung 8 steht und ausgegebene Flüssigkeit in das Auffanggefäß 13 strömen kann.

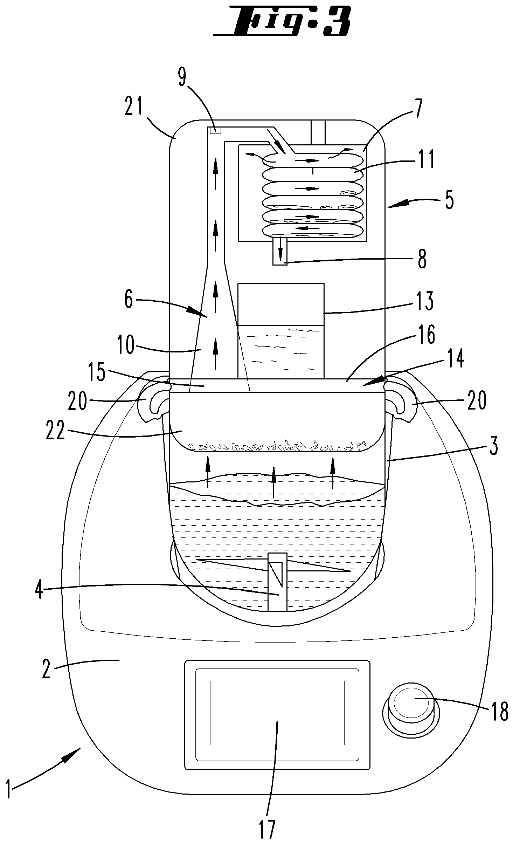

Figur 3 zeigt eine Prinzipskizze einer Küchenmaschine 1 mit einer Destillationseinrichtung 5, welche schematisch das Funktionsprinzip einer wie in Figur 2 ausgebildeten Küchenmaschine 1 wiedergibt. Im Inneren der Destillationseinrichtung 5, d.h. innerhalb des Gehäuses 21 befindet sich die Dampfaufnahmeeinrichtung 6, welche hier als trichterförmiger Strömungskanal 10 ausgebildet ist. In eine in der Blattebene von unten nach oben betrachtete Richtung verjüngt sich der Strömungskanal 10. Dies entspricht der Richtung von einer Eintrittsöffnung 15 der Dampfaufnahmeeinrichtung 6 bis hin zu der Kondensationseinrichtung 7. Die Eintrittsöffnung 15 der Destillationseinrichtung 5 ist eine in der Grundplatte 16 ausgesparte Öffnung. Durch diese Eintrittsöffnung 15 kann Dampf in die Dampfaufnahmeeinrichtung 6 gelangen. Die Dampfaufnahmeeinrichtung 6 weist einen Temperatursensor 9 auf, welcher hier als Halbleitersensor ausgebildet ist. Die Messwerte des Temperatursensors 9 werden mittels einer nicht dargestellten Auswerte- und Steuereinrichtung der Küchenmaschine 1 ausgelesen. An die Dampfaufnahmeeinrichtung 6 schließt sich die Kondensationseinrichtung 7 an. Diese weist eine Kühleinrichtung 11 auf, die einen schraubenförmigen Strömungsweg bereitstellt, welcher durch ein gekühltes Gehäuse geführt ist. Die Kühlung kann bspw. mittels eines Peltier-Elementes erfolgen. Des Weiteren zeigt Figur 3 ein innerhalb des Zubereitungsgefäßes 3 der Küchenmaschine 1 angeordnetes Sieb 22, welches während einer Aromatisierung einer Alkoholbasis zur Aufnahme von Aromastoffen dienen kann.

Zur Herstellung von Trinkalkohol mittels der Küchenmaschine 1 wird zunächst eine Maische aus Getreide, Obst oder dergleichen hergestellt. Dazu wird bspw. Getreide in das Zubereitungsgefäß 3 gegeben und mittels eines an dem Rührwerk 4 befestigten Messersatzes zerkleinert, d.h. geschrotet. Anschließend wird Wasser zugegeben und das Gemisch unter Erwärmung mittels des Rührwerkes 4 gerührt. Nach dieser sogenannten Verkleisterung wird ein Enzym oder Malz zugegeben. Anschließend muss das Gemisch gären, was üblicherweise mehrere Tage in Anspruch nimmt.

Nach dem Gärprozess wird das die Maische enthaltende Zubereitungsgefäß 3 ggf. wieder mit dem Basisgerät 2 der Küchenmaschine 1 und der Destillationseinrichtung 5 verbunden, sodass die Eintrittsöffnung 15 der Destillationseinrichtung 5 über dem Zubereitungsgefäß 3 liegt. Anschließend wird die Maische mittels der Heizeinrichtung der Küchenmaschine 1 zum Kochen gebracht, sodass Dampf durch die Eintrittsöffnung 15 in die Dampfaufnahmeeinrichtung 6 der Destillationseinrichtung 5 gelangt, an dem Temperatursensor 9 vorbeiströmt und schließlich innerhalb der Kondensationseinrichtung 7 kondensiert. Das Kondensat gelangt durch die Flüssigkeitsausgabeeinrichtung 8 in das in dem des Aufnahmebereich 12 angeordnete Auffanggefäß 13. Während des Destillationsvorganges misst der Temperatursensor 9 die Temperatur des Dampfes innerhalb der Dampfaufnahmeeinrichtung 6. Die Messwerte werden an die Auswerte- und Steuereinrichtung der Küchenmaschine 1 weitergeleitet und dort mit einem definierten Temperaturbereich verglichen, welcher den Temperaturbereich zwischen der Siedetemperatur von Methanol und der Siedetemperatur von Ethanol angibt. Methanol siedet bei 65 Grad Celsius, während Ethanol erst bei 78 Grad Celsius siedet. Sofern die Destillation langsam durchgeführt wird, wird während eines Vorlaufs des Destillationsvorgangs zuerst eine stark methanolhaltige Fraktion gebildet, die zu entsorgen ist. Sobald der Siedepunkt von Ethanol erreicht ist, steigt der Ethanolanteil und das entstehende Kondensat bildet den trinkbaren Teil des Alkohols. Sobald die Temperatur wieder unter den Siedepunkt des Ethanols absinkt, steigt wiederum der relative Methanolanteil, sodass auch diese Fraktion wieder entsorgt werden sollte. Dies ist der sogenannte Nachlauf. Sofern die Auswerte- und Steuereinrichtung feststellt, dass die Temperatur des Dampfes niedriger ist als die Siedetemperatur des Ethanols, d.h. niedriger als 78 Grad Celsius, wird eine Information auf dem Display 17 des Basisgerätes 2 angezeigt, welche dazu auffordert, das Auffanggefäß 13 zu entleeren. Alternativ könnte auch vorgesehen sein, dass eine automatisch gesteuerte Mechanik das Auffanggefäß 13 aus dem Aufnahmebereich 12 entnimmt und entleert, oder die Flüssigkeit direkt ausgehend von der Flüssigkeitsausgabeeinrichtung 8 in einen Ausguss abgegeben wird. Hierzu ist ggf. eine zusätzliche Leitung erforderlich.

Während des Destillationsvorgangs gelangt der Dampf von der Dampfaufnahmeeinrichtung 6 in die Kondensationseinrichtung 7 und wird dort soweit heruntergekühlt, dass der Dampf zu einer Flüssigkeit kondensiert. Die Flüssigkeit wird dann in das Auffanggefäß 13 abgegeben. Nach Ende des Destillationsvorgangs, inkl. Entsorgen des Vor- und Nachlaufs, hat man eine trinkbare Alkoholbasis. Diese wird üblicherweise aromatisiert, indem wiederum die Destillationseinrichtung 5 verwendet wird. Zunächst wird die Alkoholbasis soweit verdünnt, dass bspw. ein Alkoholgehalt von 40 Vol.-% entsteht. Hierzu wird die Alkoholbasis mit Wasser gemischt. In das Zubereitungsgefäß 3 der Küchenmaschine 1 wird das Sieb 22 eingebracht, welches Aromastoffe, wie bspw. Kräuter, enthält. Sodann wird die Destillationseinrichtung 5 wieder mit dem Zubereitungsgefäß 3 verbunden und das Gemisch zum Kochen gebracht. Der entstehende Dampf durchläuft wiederum die Dampfaufnahmeeinrichtung 6, die Kondensationseinrichtung 7 und die Flüssigkeitsausgabeeinrichtung 8. Das Kondensat wird innerhalb eines Auffanggefäßes 13 gesammelt, wobei auch hier wiederum der Vor- und Nachlauf abgetrennt werden. In dem Auffanggefäß 13 befindet sich dann ein Trinkalkohol mit zuvor eingestelltem Alkoholgehalt.

Das Verfahren kann des Weiteren die Verwendung einer Waage der Küchenmaschine 1 zum Abwiegen von Getreide, Wasser und dergleichen beinhalten. Des Weiteren wird auch vorteilhaft eine Rührfunktion des Rührwerkes 4 während der Destillation weitergeführt, um bspw. ein Anbrennen zu verhindern.

### Liste der Bezugszeichen

- 1: Küchenmaschine
- 2: Basisgerät
- 3: Zubereitungsgefäß
- 4: Rührwerk
- 5: Destillationseinrichtung
- 6: Dampfaufnahmeeinrichtung
- 7: Kondensationseinrichtung
- 8: Flüssigkeitsausgabeeinrichtung
- 9: Temperatursensor
- 10: Strömungskanal
- 11: Kühleinrichtung
- 12: Aufnahmebereich
- 13: Auffanggefäß
- 14: Verbindungsbereich
- 15: Eintrittsöffnung
- 16: Grundplatte
- 17: Display
- 18: Schalter
- 19: Griff
- 20: Verriegelungselement
- 21: Gehäuse
- 22: Sieb

## Patentansprüche

1. Elektromotorisch betriebene Küchenmaschine (1) mit einem einen Elektromotor aufweisenden Basisgerät (2), einem an dem Basisgerät (2) anordenbaren Zubereitungsgefäß (3), welchem Zubereitungsgefäß (3) eine Heizeinrichtung und ein Rührwerk (4) zugeordnet sind, und einer mit dem Zubereitungsgefäß (3) verbindbaren Destillationseinrichtung (5), welche eine Dampfaufnahmeeinrichtung (6), eine Kondensationseinrichtung (7) und eine Flüssigkeitsausgabeeinrichtung (8) aufweist, wobei das Zubereitungsgefäß (3) und die Dampfaufnahmeeinrichtung (6) in verbundenem Zustand von Zubereitungsgefäß (3) und Destillationseinrichtung (5) eine Strömungsverbindung zueinander aufweisen, **dadurch gekennzeichnet, dass** die Destillationseinrichtung (5) einen der Flüssigkeitsausgabeeinrichtung (8) zugeordneten Aufnahmebereich (12) zur Anordnung eines Auffanggefäßes (13) aufweist, wobei die Flüssigkeitsausgabeeinrichtung (8) in dem Aufnahmebereich aus einem Gehäuse (21) der Destillationseinrichtung (5) herausragt.

2. Küchenmaschine (1) nach Anspruch 1, **dadurch gekennzeichnet, dass** die Dampfaufnahmeeinrichtung (6) einen Temperatursensor (9) zur Messung der Dampftemperatur aufweist.

3. Küchenmaschine (1) nach Anspruch 1 oder 2, **dadurch gekennzeichnet, dass** die Dampfaufnahmeeinrichtung (6) ein eine Strömungsverbindung von dem Zubereitungsgefäß (3) zu der Kondensationseinrichtung (7) bereitstellender Strömungskanal (10) ist.

4. Küchenmaschine (1) nach einem der vorhergehenden Ansprüche, **dadurch gekennzeichnet, dass** sich die Dampfaufnahmeeinrichtung (6) in Strömungsrichtung des Dampfes trichterförmig verjüngt.

5. Küchenmaschine (1) nach einem der vorhergehenden Ansprüche, **dadurch gekennzeichnet, dass** die Kondensationseinrichtung (7) eine Kühleinrichtung (11), insbesondere einen Wärmeübertrager oder ein Peltier-Element, aufweist.

6. Küchenmaschine (1) nach -einem der vorhergehenden Ansprüche,
**dadurch gekennzeichnet, dass** dem Aufnahmebereich (12) eine Einrichtung zum automatischen Entleeren und/oder Entnehmen des Auffanggefäßes (13) zugeordnet ist.

7. Küchenmaschine (1) nach einem der vorhergehenden Ansprüche, **gekennzeichnet durch** eine Auswerte- und Steuereinrichtung, welche eingerichtet ist, eine gemessene Temperatur mit einem definierten Temperaturbereich zu vergleichen und im Falle einer Abweichung der gemessenen Temperatur von dem definierten Temperaturbereich eine Information über die Abweichung an einen Nutzer der Küchenmaschine (1) zu übermitteln und/oder ein Entleeren eines Auffanggefäßes (13) zu veranlassen.

8. Destillationseinrichtung (5) zum Aufsetzen auf ein Zubereitungsgefäß (3) einer Küchenmaschine (1), mit einer Dampfaufnahmeeinrichtung (6), einer Kondensationseinrichtung (7) und einer Flüssigkeitsausgabeeinrichtung (8), wobei die Destillationseinrichtung (5)
einen Verbindungsbereich (14) zur Herstellung einer Strömungsverbindung zu dem Zubereitungsgefäß (3) der Küchenmaschine (1) aufweist, wobei die Dampfaufnahmeeinrichtung (6) eine in dem Verbindungsbereich (14) ausgebildete Eintrittsöffnung (15) aufweist, wobei der Verbindungsbereich (14) eine die Eintrittsöffnung (15) aufweisende Grundplatte (16) aufweist, und wobei die Destillationseinrichtung (5) einen der Flüssigkeitsausgabeeinrichtung (8) zugeordneten Aufnahmebereich (12) zur Anordnung eines Auffanggefäßes (13) aufweist, **dadurch gekennzeichnet, dass** der Aufnahmebereich (12) auf der dem Zubereitungsgefäß (3) gegenüberliegenden Seite der Grundplatte (16) ausgebildet ist, so dass das Auffanggefäß (13) in dem Aufnahmebereich (12) auf die Grundplatte (16) gestellt werden kann.

9. Verfahren zum Betrieb einer Küchenmaschine (1) nach einem der Ansprüche 1 bis 7.

## Claims

1. Electric-motor-operated food processor (1) comprising a base unit (2) which has an electric motor, a preparation vessel (3) which can be arranged on the base unit (2), with which preparation vessel (3) a heating device and a mixer (4) are associated, and a distillation device (5) which can be connected to the preparation vessel (3) and which has a steam receiving device (6), a condensation device (7) and a liquid dispensing device (8), the preparation vessel (3) and the steam receiving device (6), when the preparation vessel (3) and the distillation device (5) are connected, having a flow connection, **characterised in that** the distillation device (5) has a receiving region (12) which is associated with the liquid dispensing device (8) and is intended for a collecting vessel (13) to be arranged therein, the liquid dispensing device (8) protruding, in the receiving region, from a housing (21) of the distillation device (5).

2. Food processor (1) according to claim 1, **characterised in that** the steam receiving device (6) has a temperature sensor (9) for measuring the steam temperature.

3. Food processor (1) according to either claim 1 or claim 2, **characterised in that** the steam receiving device (6) is a flow channel (10) providing a flow connection from the preparation vessel (3) to the condensation device (7).

4. Food processor (1) according to any of the preceding claims, **characterised in that** the steam receiving device (6) tapers in the shape of a funnel in the flow direction of the steam.

5. Food processor (1) according to any of the preceding claims, **characterised in that** the condensation device (7) has a cooling device (11), in particular a heat exchanger or a Peltier element.

6. Food processor (1) according to any of the preceding claims, **characterised in that** a device for automatically emptying and/or removing the collecting vessel (13) is associated with the receiving region (12).

7. Food processor (1) according to any of the preceding claims, **characterised by** an evaluation and control device which is set up to compare a measured temperature with a defined temperature range and, if the measured temperature deviates from the defined temperature range, to transmit information about the deviation to a user of the food processor (1) and/or to cause a collecting vessel (13) to be emptied.

8. Distillation device (5) to be placed on a preparation vessel (3) of a food processor (1), comprising a steam receiving device (6), a condensation device (7) and a liquid dispensing device (8), the distillation device (5) having a connecting region (14) for establishing a flow connection to the preparation vessel (3) of the food processor (1), the steam receiving device (6) having an inlet opening (15) formed in the connecting region (14), the connecting region (14) having a base plate (16) that has the inlet opening (15), and the distillation device (5) having a receiving region (12) which is associated with the liquid dispensing device (8) and is intended for a collecting vessel (13) to be arranged therein, **characterised in that** the receiving region (12) is formed on the side of the base plate (16) that is opposite the preparation vessel (3), such that the collecting vessel (13) can be placed in the receiving region (12) on the base plate (16).

9. Method for operating a food processor (1) according to any of claims 1 to 7.

## Revendications

1. Appareil de cuisine (1) à moteur électrique, comprenant une unité de base (2) comportant un moteur électrique, un récipient de préparation (3) pouvant être joint à l'unité de base (2) auquel récipient de préparation (3) sont associés un dispositif de chauffage et un agitateur (4), et un dispositif de distillation (5) pouvant être relié au récipient de préparation (3), qui présente un dispositif de réception de vapeur (6), un dispositif de condensation (7) et un dispositif de distribution de liquide (8), dans lequel le récipient de préparation (3) et le dispositif de réception des vapeur (6) sont en liaison d'écoulement l'un avec l'autre lorsque le récipient de préparation (3) et le dispositif de distillation (5) sont à l'état relié, **caractérisé en ce que** le dispositif de distillation (5) présente une région de réception (12) associée au dispositif de distribution de liquide (8) pour l'agencement d'un récipient de collecte (13), le dispositif de distribution de liquide (8) dépassant d'un boîtier (21) du dispositif de distillation (5) dans la région de réception.

2. Appareil de cuisine (1) selon la revendication 1, **caractérisé en ce que** le dispositif de réception de vapeur (6) comprend un capteur de température (9) pour mesurer la température de la vapeur.

3. Appareil de cuisine (1) selon la revendication 1 ou 2, **caractérisé en ce que** le dispositif de réception de vapeur (6) est un canal d'écoulement (10) fournissant une liaison d'écoulement du récipient de préparation (3) au dispositif de condensation (7).

4. Appareil de cuisine (1) selon l'une des revendications précédentes, **caractérisé en ce que** le dispositif de réception de vapeur (6) se rétrécit en forme d'entonnoir dans le sens de l'écoulement de la vapeur.

5. Appareil de cuisine (1) selon l'une des revendications précédentes, **caractérisé en ce que** le dispositif de condensation (7) comprend un dispositif de refroidissement (11), en particulier un échangeur de chaleur ou un élément Peltier.

6. Appareil de cuisine (1) selon l'une des revendications précédentes, **caractérisé en ce qu'**un dispositif pour vider et/ou enlever automatiquement le récipient de collecte (13) est associé à la région de réception (12).

7. Appareil de cuisine (1) selon l'une des revendications précédentes, **caractérisé par** un dispositif d'évaluation et de commande qui est conçu pour comparer une température mesurée avec une plage de température définie et, en cas d'écart de la température mesurée par rapport à la plage de température définie, pour transmettre une information sur l'écart à un utilisateur de l'appareil de cuisine (1) et/ou pour provoquer un vidage d'un récipient de collecte (13).

8. Dispositif de distillation (5) destiné à être placé sur un récipient de préparation (3) d'un appareil de cuisine (1), comportant un dispositif de réception de vapeur (6), un dispositif de condensation (7) et un dispositif de distribution de liquide (8), le dispositif de distillation (5) présentant une région de raccordement (14) pour établir une liaison d'écoulement avec le récipient de préparation (3) de l'appareil de cuisine (1), le dispositif de réception de vapeur (6) présentant une ouverture d'entrée (15) formée dans la région de raccordement (14), la région de raccordement (14) comportant une plaque de base (16) qui présente l'ouverture d'entrée (15) et le dispositif de distillation (5) comportant une région de réception (12) associée au dispositif de distribution de liquide (8), pour l'agencement d'un récipient de collecte (13), **caractérisé en ce que** la région de réception (12) est formée sur le côté de la plaque de base (16) qui est opposé au récipient de préparation (3) de sorte que le récipient de collecte (13) peut être placé sur la plaque de base (16) dans la région de réception (12).

9. Procédé de fonctionnement d'un appareil de cuisine (1) selon l'une des revendications 1 à 7.
